(19) Europäisches Patentamt / European Patent Office / Office européen des brevets

(11) **EP 4 437 224 B1**

(12) **FASCICULE DE BREVET EUROPEEN**

(45) Date de publication et mention de la délivrance du brevet:
**22.10.2025 Bulletin 2025/43**

(21) Numéro de dépôt: **22809140.1**

(22) Date de dépôt: **26.10.2022**

(51) Classification Internationale des Brevets (IPC):
**F02K 5/00** *(2006.01)*      **F02C 7/275** *(2006.01)*
**B64D 27/24** *(2024.01)*      **B64D 31/18** *(2024.01)*
**B64D 27/33** *(2024.01)*

(52) Classification Coopérative des Brevets (CPC):
**F02K 5/00; B64D 27/33; B64D 27/357; B64D 31/18; F02C 7/275;** B64D 2221/00; F05D 2220/76

(86) Numéro de dépôt international:
**PCT/EP2022/079979**

(87) Numéro de publication internationale:
**WO 2023/094101 (01.06.2023 Gazette 2023/22)**

(54) **SYSTÈME DE CONVERSION ET DE TRANSPORT D'ÉNERGIE ÉLECTRIQUE POUR L'HYBRIDATION INTERNE D'UNE TURBOMACHINE D'AÉRONEF**

SYSTEM ZUR UMWANDLUNG UND ZUM TRANSPORT VON ELEKTRISCHER ENERGIE FÜR DIE INTERNE HYBRIDISIERUNG EINER FLUGZEUGTURBOMASCHINE

SYSTEM FOR CONVERTING AND TRANSPORTING ELECTRICAL ENERGY FOR THE INTERNAL HYBRIDISATION OF AN AIRCRAFT TURBOMACHINE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **25.11.2021 FR 2112486**

(43) Date de publication de la demande:
**02.10.2024 Bulletin 2024/40**

(73) Titulaires:
• **SAFRAN**
  **75015 Paris (FR)**
• **SAFRAN AIRCRAFT ENGINES**
  **75015 Paris (FR)**
• **Safran Electrical & Power**
  **31702 Blagnac (FR)**

(72) Inventeurs:
• **FEFERMANN, Yann**
  **77550 MOISSY-CRAMAYEL (FR)**
• **REIGNER, Pierre-Alain Jean Philippe**
  **77550 MOISSY-CRAMAYEL (FR)**
• **NANEIX, Philippe**
  **77550 MOISSY-CRAMAYEL (FR)**
• **DELBOSC, Philippe**
  **77550 MOISSY-CRAMAYEL (FR)**

(74) Mandataire: **Marconnet, Sébastien**
**Cabinet Sébastien Marconnet**
**1 Quinquies rue Basse de la Terrasse (Bâtiment A)**
**92190 Meudon (FR)**

(56) Documents cités:
**EP-A1- 3 693 571      EP-A1- 3 832 096**
**WO-A1-2021/099720      US-A1- 2017 226 934**
**US-A1- 2021 025 334**

## Description

La présente invention porte sur un système de conversion et de transport d'énergie électrique pour l'hybridation interne d'une turbomachine d'aéronef. L'invention trouve une application particulièrement avantageuse avec les architectures propulsives hybrides des avions civiles ou militaires.

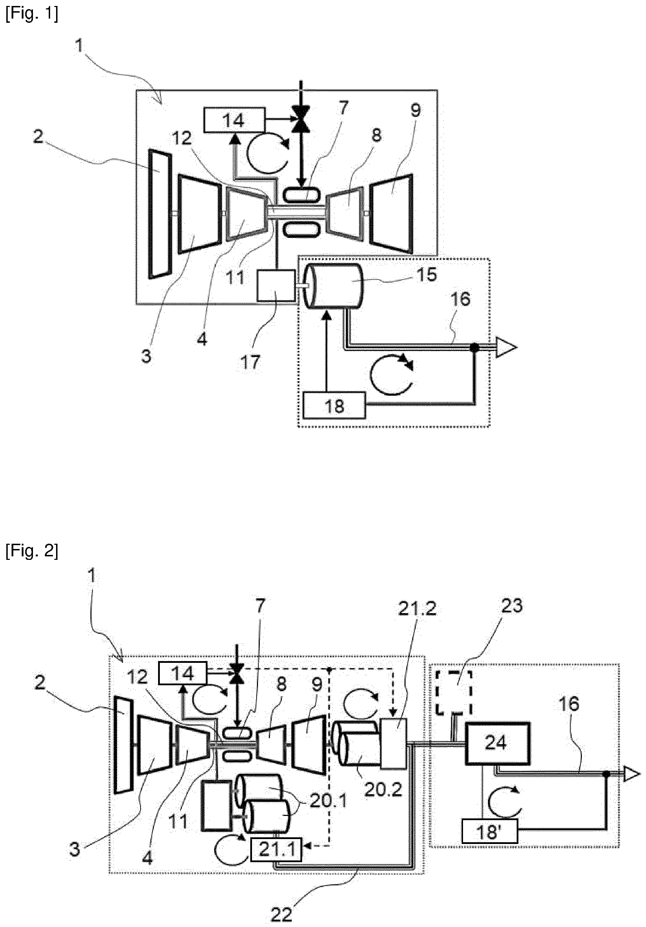

Comme cela est illustré par la figure 1, une turbomachine 1 comprend classiquement une soufflante 2, un ou plusieurs étages de compresseurs, par exemple un compresseur basse pression 3 et un compresseur haute pression 4, une chambre de combustion 7, un ou plusieurs étages de turbines, par exemple une turbine haute pression 8 et une turbine basse pression 9, et une tuyère d'échappement des gaz (non représentée). Typiquement, la turbine haute pression 8 entraîne en rotation le compresseur haute pression 4 par l'intermédiaire d'un premier arbre, dit arbre haute pression 11, tandis que la turbine basse pression 9 entraîne en rotation le compresseur basse pression 3 et la soufflante 2 par l'intermédiaire d'un deuxième arbre, dit arbre basse pression 12. L'arbre basse pression 12 est généralement logé dans l'arbre haute pression 11. Un dispositif de contrôle moteur 14 de type FADEC (pour "Full Authority Digital Engine Control" en anglais) permet de surveiller et de contrôler l'état des composants de la turbomachine 1 et de régler les différents paramètres pour optimiser les performances de la turbomachine 1.

Afin d'assurer l'alimentation du réseau électrique de l'avion dans ce type d'architecture non hybride, au moins une génératrice 15 est connectée à l'arbre haute pression 11 par l'intermédiaire d'un boîtier d'accessoires 17 ou AGB pour "accessory gearbox" en anglais. Ce boîtier d'accessoires 17 comprend généralement un ou plusieurs trains d'engrenages qui sont entraînés en rotation par un prélèvement mécanique au moyen d'un dispositif de renvoi d'angle sur l'arbre haute pression 11. La ou les génératrices 15 peut ainsi alimenter électriquement toutes les charges électriques connectées sur le réseau électrique de l'avion 16, telles que les systèmes de commande de vol, les systèmes de dégivrage, les ventilateurs, etc...

Une unité de commande 18 dite GCU (pour "Generator Control Unit" en anglais) supervise le fonctionnement du générateur 15 considéré en assurant notamment une régulation de la tension et l'établissement de diagnostics de fonctionnement.

Une telle architecture présente l'avantage de découpler la partie mécanique propulsive par rapport au réseau électrique de l'avion 16. La puissance disponible du côté du réseau électrique de l'avion 16 est en outre maîtrisée quel que soit le régime de la turbomachine 1.

Dans le cadre d'une architecture hybride de turbomachine 1, il est possible de mettre en œuvre des canaux électriques DC connectés en parallèles tel que cela est décrit par exemple dans les documents WO2020/089544 ou WO2021/099720. Une hybridation interne de la turbomachine 1 appliquant ces principes est illustrée par la figure 2. Un premier canal DC est formé par au moins une machine électrique tournante 20.1 connectée mécaniquement à l'arbre haute pression 11. Cette machine électrique 20.1 est associée à un convertisseur AC/DC 21.1. Un deuxième canal DC est formé par au moins une machine électrique tournante 20.2 connectée mécaniquement à l'arbre basse pression 12. Cette machine électrique 20.2 est associée à un convertisseur AC/DC 21.2. Les convertisseurs 21.1, 21.2 sont reliés électriquement sur un réseau électrique interne 22 de la turbomachine 1. Un convertisseur électrique 24 piloté par un contrôleur 18' assure l'interface entre le réseau électrique interne 22 de la turbomachine 1 et le réseau électrique de l'avion 16. Au moins un sous-ensemble 23 de stockage d'énergie électrique, tel que par exemple une batterie ou des supercondensateurs, peut le cas échéant être connecté sur le réseau électrique interne 22.

Une telle architecture permet d'assurer une fonction de démarrage de la turbomachine 1 via une puissance électrique fournie par les machines électriques 20.1, 20.2. Cette architecture assure également une fonction d'assistance de la turbomachine 1 suivant laquelle le réseau électrique injecte ou prélève de la puissance sur l'arbre haute pression 11 ou l'arbre basse pression 12 selon une référence imposée par le dispositif de contrôle moteur 14.

Du fait du couplage électrique entre le réseau électrique interne 22 de la turbomachine 1 et le réseau électrique de l'avion 16, un problème de qualité du réseau électrique 22 du côté de la turbomachine 1, comme par exemple l'apparition de pollutions harmoniques, se répercute du côté du réseau électrique de l'avion 16, et inversement.

L'invention vise notamment à remédier efficacement à cet inconvénient en proposant un système de conversion et de transport d'énergie électrique selon la revendication 1.

L'invention permet ainsi de séparer le réseau électrique interne de la turbomachine par rapport au réseau électrique de l'avion, dans la mesure où la génératrice permet d'alimenter les systèmes connectés au réseau électrique de bord indépendamment du système d'hybridation moteur.

L'invention permet également de conserver une indépendance entre la partie propulsive et l'avion en ne réalisant aucune mesure sur les prélèvements électriques sur la partie avion gérée par l'avionneur.

L'invention propose également une architecture sûre en imposant un fonctionnement en boucle ouverte en cas de dysfonctionnement du système d'hybridation.

Selon une réalisation de l'invention, le dispositif de contrôle est configuré pour modifier un coefficient de répartition de puissance Sp en fonction de phases de fonctionnement de la turbomachine, ledit coefficient de répartition de puissance Sp étant défini de la façon suivante:

$$Sp= P\_hp/(P\_hp+P\_bp)$$

- P_hp étant une portion de la puissance de l'arbre haute pression passant par le boîtier d'accessoires,
- P_bp étant une portion de la puissance de l'arbre basse pression passant par la première machine électrique tournante.

Selon une réalisation de l'invention, la portion de la puissance de l'arbre haute pression passant par la boîtier d'accessoires est déterminée à partir d'une mesure de vitesse de rotation effectuée par un capteur de vitesse monté sur l'arbre haute pression et d'une valeur de couple de l'arbre haute pression obtenue au moyen d'un estimateur de couple. Cet estimateur de couple pourra être positionné entre un dispositif de renvoi d'angle et une entrée du boîtier d'accessoires. L'estimateur de couple pourra également être disposé sur l'arbre de la génératrice ou sur l'arbre de la deuxième machine électrique. Il est également possible d'utiliser un estimateur de couple logiciel mettant en œuvre un algorithme ou une cartographie dédiée.

Selon une réalisation de l'invention, la portion de la puissance de l'arbre basse pression passant par la première machine électrique tournante est déterminée à partir d'un courant et d'une tension du réseau électrique interne de la turbomachine.

Selon une réalisation de l'invention, ledit système comporte deux machines électriques tournantes reliées mécaniquement à l'arbre haute pression par l'intermédiaire du boîtier d'accessoires.

Selon une réalisation de l'invention, ledit système comporte deux machines électriques tournantes reliées mécaniquement à l'arbre basse pression.

Selon une réalisation de l'invention, ledit système comporte deux génératrices reliées mécaniquement au boîtier d'accessoires.

Selon une réalisation de l'invention, ledit système comporte deux canaux électriques formés chacun par deux machines électriques tournantes et deux modules électriques de puissance connectés électriquement au réseau électrique interne de la turbomachine.

Selon une réalisation de l'invention, ledit système comporte au moins un sous-ensemble de stockage d'énergie électrique, tel qu'une batterie ou des supercondensateurs, connecté électriquement sur le réseau électrique interne de la turbomachine.

Selon une réalisation de l'invention, ledit système comporte une génératrice reliée mécaniquement au dispositif d'accouplement de l'arbre basse pression, ladite génératrice étant destinée à alimenter électriquement le réseau électrique de l'avion.

Selon une réalisation de l'invention, la génératrice et la deuxième machine électrique tournante sont montées sur le boîtier d'accessoires tête-bêche l'une par rapport à l'autre.

L'invention a également pour objet un avion comportant un système de conversion et de transport d'énergie électrique tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition:

[Fig. 1] La figure 1, déjà décrite, est une représentation schématique d'une architecture non hybride de turbomachine selon l'état de la technique munie d'une génératrice destinée à alimenter un réseau électrique de l'avion;

[Fig. 2] La figure 2, déjà décrite, est une représentation schématique d'une architecture hybride de turbomachine munie d'une interface entre un réseau électrique interne de la turbomachine et un réseau électrique de l'avion;

[Fig. 3] La figure 3 est une représentation schématique d'une architecture hybride de turbomachine selon la présente invention;

[Fig. 4] La figure 4 est un diagramme représentant, pour différentes valeurs d'un coefficient de répartition de puissance, des niveaux de puissances prélevées sur l'arbre haute pression et l'arbre basse pression afin d'alimenter des charges électriques connectées sur un réseau électrique de l'avion;

[Fig. 5] [Fig. 6] [Fig. 7] [Fig. 8] [Fig. 9] Les figures 5 à 9 sont des représentations schématiques de variantes de réalisation de l'architecture hybride de turbomachine selon la présente invention.

Il est à noter que les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

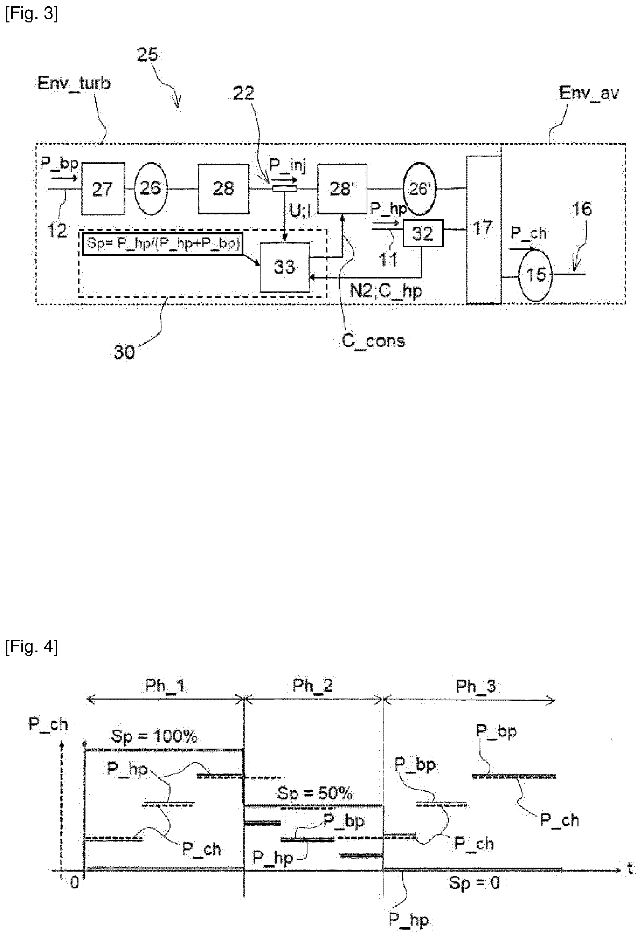

La figure 3 montre un système 25 de conversion et de transport d'énergie électrique dans un aéronef propulsé par une turbomachine 1 déjà décrite en référence avec la figure 1 sur laquelle on peut prélever ou injecter une puissance via l'arbre haute pression 11 et/ou l'arbre basse pression 12. Le rectangle Env_av encadre les composants de l'environnement de l'avion tandis que le rectangle Env_turb encadre les composants de l'environnement de la turbomachine.

Le système 25 comporte au moins une première machine électrique tournante 26 reliée mécaniquement à l'arbre basse pression 12 par l'intermédiaire d'un dispositif d'accouplement 27. Le dispositif d'accouplement 27 pourra, le cas échéant, intégrer une fonction mécanique de désaccouplement de la machine électrique 26 notamment en cas de dysfonctionnement de cette dernière. Un premier module électrique de puissance 28 est destiné à être connecté électriquement d'une part à la première machine électrique 26 et d'autre part à un réseau électrique interne 22 de la turbomachine 1. Le réseau électrique interne 22 de la turbomachine 1 est de préférence un réseau électrique continu.

Une deuxième machine électrique tournante 26' est reliée mécaniquement à l'arbre haute pression 11 par l'intermédiaire du boîtier d'accessoires 17. Un deuxième module électrique de puissance 28' est relié électriquement d'une part à la deuxième machine électrique tournante 26' et d'autre part au réseau électrique interne 22 de la turbomachine 1. Le premier module électrique de puissance 28 et le deuxième module électrique de puissance 28' sont ainsi connectés électriquement au réseau électrique interne 22 de la turbomachine 1.

Les machines électriques tournantes 26, 26' sont de préférence des machines électriques de type réversible aptes à fonctionner dans un mode moteur et dans un mode générateur. Dans le mode moteur, une machine électrique tournante 26, 26' transforme de l'énergie électrique prélevée sur le réseau électrique interne 22 en une énergie mécanique injectée sur l'arbre basse pression 12 ou l'arbre haute pression 11. A cet effet, le module électrique de puissance 28, 28' fonctionne dans un mode onduleur pour transformer une tension continue du réseau électrique interne 22 en une tension alternative polyphasée appliquée sur les phases de la machine électrique 26, 26' correspondante.

Dans le mode générateur, une machine électrique tournante 26, 26' transforme de l'énergie mécanique prélevée sur l'arbre basse pression 12 ou l'arbre haute pression 11 en une énergie électrique injectée sur le réseau électrique interne 22 de la turbomachine 1. A cet effet, le module électrique de puissance 28, 28' fonctionne dans un mode redresseur pour transformer une tension alternative polyphasée générée par la machine électrique 26, 26' en une tension continue appliquée sur le réseau électrique interne 22. Un module électrique de puissance 28, 28' prend ainsi la forme d'un convertisseur AC/DC.

Les machines électriques tournantes 26, 26' sont de préférence des machines de type synchrone à aimants permanents. Alternativement, les machines électriques tournantes 26, 26' pourraient prendre la forme de machines électriques de type asynchrone ou tout autre type de machine électrique adapté à l'application.

Par ailleurs, une génératrice 15 est accouplée avec le boîtier d'accessoires 17. La génératrice 15 est destinée à alimenter électriquement un réseau électrique de l'avion 16. La génératrice 15 pourra prendre la forme d'une machine électrique tournante à rotor bobiné. La génératrice 15 est isolée électriquement par rapport aux autres machines électriques tournantes 26, 26' connectées au réseau électrique interne 22 de la turbomachine 1. Autrement dit, le réseau électrique de l'avion 16 est isolé électriquement par rapport au réseau électrique interne 22 de la turbomachine 1. Il n'existe pas de connexion électrique entre ces deux réseaux électriques 16 et 22.

La génératrice 15 et la deuxième machine électrique tournante 26' sont montées sur le boîtier d'accessoires 17 tête-bêche l'une par rapport à l'autre. Une telle configuration permet de maximiser les raideurs et minimiser les temps de réponse. Cela permet également d'adapter l'encombrement de l'ensemble à l'application. Alternativement, la génératrice 15 et la deuxième machine électrique tournante 26' pourront être montées du même côté du boîtier d'accessoires 17.

Un dispositif de contrôle 30 est apte à piloter une assistance au démarrage de la turbomachine 1 par au moins une machine électrique tournante 26, 26', à compenser des prélèvements de puissance effectués par la génératrice 15, et à effectuer une répartition entre une puissance prélevée à l'arbre haute pression 11 et une puissance prélevée à l'arbre basse pression 12 en fonction de phases de fonctionnement de la turbomachine 1.

Avantageusement, le dispositif de contrôle 30 est configuré pour modifier un coefficient de répartition de puissance Sp en fonction de phases de fonctionnement de la turbomachine 1 défini de la façon suivante:

$$Sp = P\_hp/(P\_hp + P\_bp)$$

- P_hp étant une portion de la puissance de l'arbre haute pression 11 passant le boîtier d'accessoires 17,
- P_bp étant une portion de la puissance P_bp de l'arbre basse pression 12 passant par la première machine électrique tournante 26.

La portion de la puissance P_hp de l'arbre haute pression 11 passant par le boîtier d'accessoires 17 est déterminée à partir d'une mesure de vitesse de rotation N2 effectuée par un capteur de vitesse 32 monté sur l'arbre haute pression 11 et d'une valeur de couple C_hp de l'arbre haute pression 11 obtenue au moyen d'un estimateur de couple. L'estimateur de couple pourra être un estimateur positionné entre un dispositif de renvoi d'angle et une entrée du boîtier d'accessoires 17. L'estimateur de couple pourra également être disposé sur l'arbre de la génératrice 15 ou sur l'arbre de la deuxième machine électrique 26'. Il est également possible d'utiliser un estimateur de couple logiciel mettant en œuvre un algorithme ou une cartographie dédiée.

La portion de la puissance P_bp de l'arbre basse pression 12 passant par la machine électrique tournante 26 est déterminée à partir d'un courant I et d'une tension U du réseau électrique interne 22.

La figure 4 illustre différentes valeurs du coefficient de répartition de puissance Sp au cours de différentes phases de fonctionnement de la turbomachine 1. Au cours d'une phase de fonctionnement Ph_1, la valeur du coefficient de répartition de puissance Sp vaut 1 de sorte que toute la puissance P_ch consommée par les charges électriques connectées sur le réseau électrique de l'avion 16 est prélevée sur l'arbre haute pression 11 via la génératrice 15. On se retrouve alors dans une configuration de fonctionnement équivalente à celle d'une architecture non-hybride.

Au cours d'une phase de fonctionnement Ph_2, la valeur du coefficient de répartition de puissance Sp vaut 0.5, de sorte que la puissance P_ch consommée par les charges électriques connectées sur le réseau électrique de l'avion 16 est répartie équitablement entre une puissance P_hp prélevée sur l'arbre haute pression 11 et une puissance P_bp prélevée sur l'arbre basse pression 12.

Au cours d'une phase de fonctionnement Ph_3, la valeur du coefficient de répartition de puissance Sp vaut 0 de sorte que toute la puissance P_ch consommée par les charges électriques connectées sur le réseau électrique de l'avion 16 est prélevée sur l'arbre basse pression 12.

La puissance P_bp prélevée sur l'arbre basse pression 12 est transformée en puissance électrique P_inj sur le réseau électrique interne 22 de la turbomachine 1 par la machine électrique 26 et le module 28 associé. Cette puissance électrique est transformée par la machine électrique 26' et le module associé 28' en une puissance mécanique appliquée sur le boîtier d'accessoires 17 auquel est connectée la génératrice 15.

Bien entendu, ces trois cas de figures ont été présentés pour faciliter la compréhension de l'invention. Le coefficient de répartition de puissance Sp pourra prendre des valeurs intermédiaires à celles représentées sur le diagramme.

Afin d'effectuer une commande en couple C_cons de la machine électrique 28', un module 33 de calcul de la puissance à injecter pour alimenter les charges électriques reçoit en entrée une valeur de coefficient de répartition de puissance Sp, une valeur de puissance injectée sur le réseau électrique interne 22 de la turbomachine 1, et une valeur de puissance P_hp de l'arbre haute pression 11. Une fois la consigne de couple C_cons déterminée à partir de ces valeurs, le module électrique de puissance 28' pourra piloter la machine électrique tournante 26' dans un mode MLI (pour "Modulation à Largeur d'Impulsion") ou dans un mode pleine onde. Le mode de pilotage choisi des machines électriques 26, 26' dépend de l'application.

En cas de dysfonctionnement du système d'hybridation, on met en œuvre de préférence un pilotage en boucle ouverte à prélèvement imposé sur l'arbre basse pression 12 ou à prélèvement imposé sur l'arbre haute pression 11.

Dans le cas où les machines électriques tournantes 26, 26' sont utilisées uniquement pour effectuer un prélèvement de puissance sur l'arbre basse pression 12 afin d'injecter de la puissance sur le réseau électrique de l'avion 16, il est possible de simplifier la configuration de l'architecture hybride. En effet, dans ce cas, la machine électrique 26 pourra prendre la forme d'une génératrice tandis que le module électrique de puissance 28 associé pourra uniquement avoir une fonction de pont redresseur de tension plus économique qu'un module électrique de puissance ayant également une fonction d'onduleur.

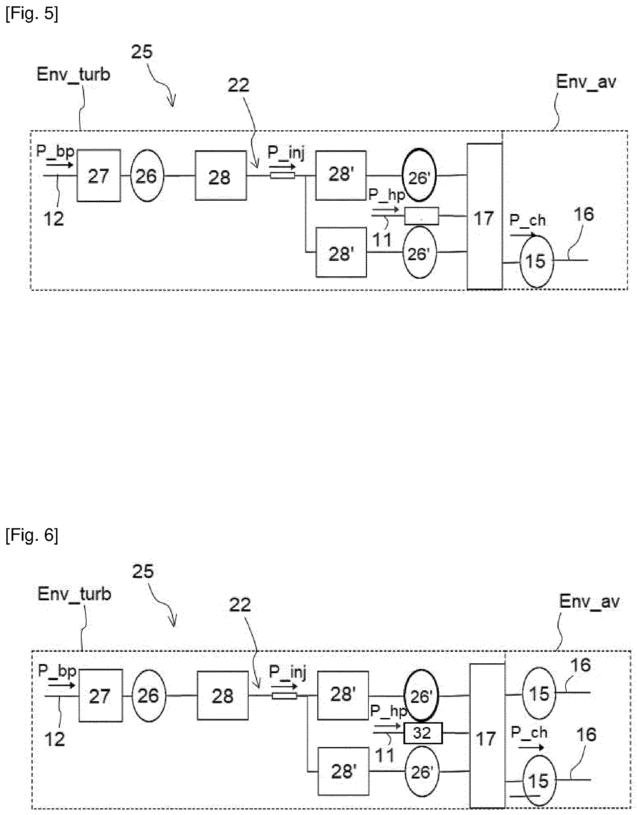

Dans le mode de réalisation de la figure 5, le système 25 comporte deux machines électriques tournantes 26' réversibles reliées mécaniquement à l'arbre haute pression 11 par l'intermédiaire du boîtier d'accessoires 17. Chaque machine électrique tournante 26' est associée à un module électrique de puissance 28' connecté au réseau électrique interne 22 de la turbomachine 1. Alternativement, le système 25 comporte deux machines électriques tournantes 26 reliées mécaniquement à l'arbre basse pression 12.

Dans le mode de réalisation de la figure 6, le système 25 comporte deux génératrices 15 reliées mécaniquement au boîtier d'accessoires 17 et destinées à alimenter le réseau électrique de l'avion 16.

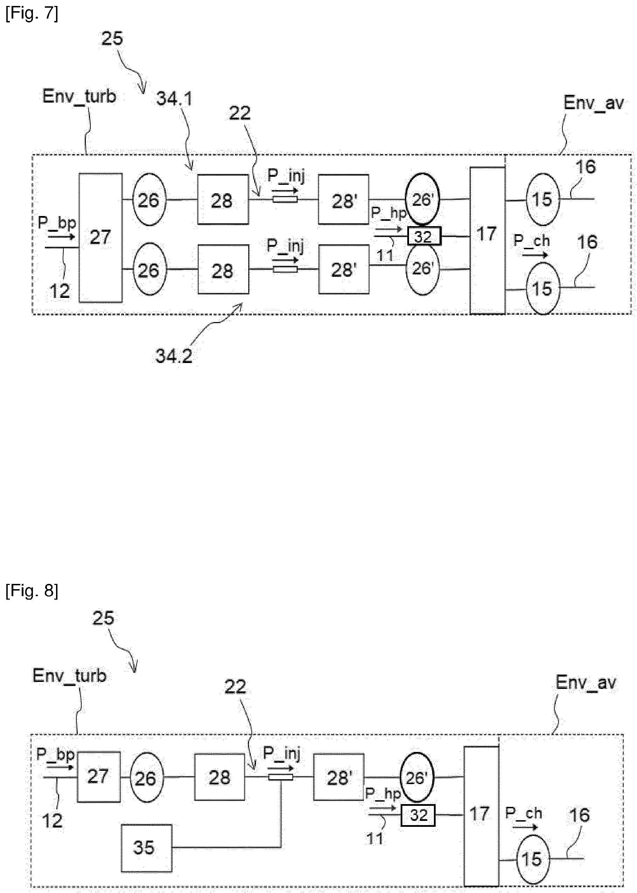

Dans le mode de réalisation de la figure 7, le système 25 comporte deux canaux électriques 34.1, 34.2 formés chacun par deux machines électriques tournantes 26, 26' et deux modules électriques de puissance 28, 28' connectés électriquement au réseau électrique interne 22 de la turbomachine 1. En outre, deux génératrices 15 destinées à alimenter le réseau de bord sont reliées mécaniquement au boîtier d'accessoires 17.

Dans le mode de réalisation de la figure 8, le système 25 comporte au moins un sous ensemble 35 de stockage d'énergie électrique, tel qu'une batterie ou des supercondensateurs, connecté électriquement sur le réseau électrique interne 22 de la turbomachine 1.

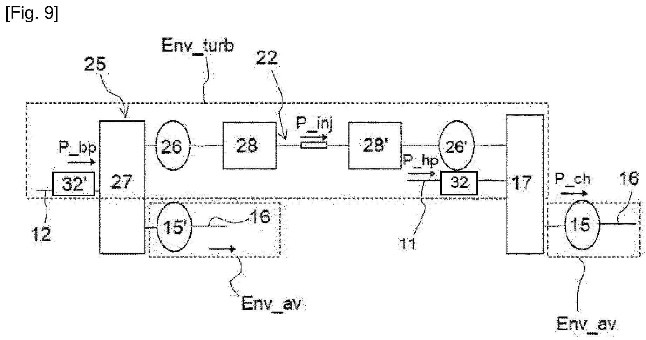

Dans le mode de réalisation de la figure 9, le système 25 comporte une génératrice 15' reliée mécaniquement au dispositif d'accouplement 27 de l'arbre basse pression 12. La génératrice 15' est associée à un capteur de mesure 32' monté sur l'arbre basse pression 12 pour en déterminer notamment la vitesse de rotation. La génératrice 15' est destinée à alimenter électriquement le réseau électrique 16 de l'avion.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Système (25) de conversion et de transport d'énergie électrique pour un avion propulsé par une turbomachine (1) sur laquelle on peut prélever ou injecter une puissance via un arbre haute pression (11) et/ou un arbre basse pression (12), ledit système (25) comportant:

   - un réseau électrique interne (22) de la turbomachine (1),
   - au moins une première machine électrique tournante (26) destinée à être reliée mécaniquement à l'arbre basse pression (12) par l'intermédiaire d'un dispositif d'accouplement (27),
   - un premier module électrique de puissance (28) associé à ladite première machine électrique (26),
   - une deuxième machine électrique tournante (26') destinée à être reliée mécaniquement à l'arbre haute pression (11) par l'intermédiaire d'un boîtier d'accessoires (17), et
   - un deuxième module électrique de puissance (28') associé à ladite deuxième machine électrique tournante (26'),
   - ledit premier module électrique de puissance (28) et ledit deuxième module électrique de puissance (28') étant connectés électriquement au réseau électrique interne (22) de la turbomachine (1),

   **caractérisé en ce que** ledit système (25) comporte:

   - une génératrice (15) destinée à être accouplée avec le boîtier d'accessoires (17) et destinée à alimenter électriquement un réseau électrique de l'avion (16), ledit réseau électrique interne (22) de la turbomachine (1) étant isolé électriquement par rapport au réseau électrique de l'avion (16) lorsque le système est installé dans l'avion,
   - un dispositif de contrôle (30) apte à piloter une assistance au démarrage de la turbomachine (1) par au moins une **des** machines électriques tournantes (26, 26'), à compenser des prélèvements de puissance effectués par la génératrice (15), et à effectuer une répartition entre une puissance prélevée à l'arbre haute pression (11) et une puissance prélevée à l'arbre basse pression (12) en fonction de phases de fonctionnement de la turbomachine (1).

2. Système selon la revendication 1, **caractérisé en ce que** le dispositif de contrôle (30) est configuré pour modifier un coefficient de répartition de puissance Sp en fonction de phases de fonctionnement de la turbomachine (1), ledit coefficient de répartition de puissance Sp étant défini de la façon suivante:

$$Sp = P\_hp/(P\_hp+P\_bp)$$

   - P_hp étant une portion de la puissance de l'arbre haute pression (11) passant par le boîtier d'accessoires (17),
   - P_bp étant une portion de la puissance de l'arbre basse pression (12) passant par la première machine électrique tournante (26).

3. Système selon la revendication 2, **caractérisé en ce que** la portion de la puissance (P_hp) de l'arbre haute pression (11) passant par le boîtier d'accessoires (17) est déterminée à partir d'une mesure de vitesse de rotation (N2) effectuée par un capteur de vitesse (32) monté sur l'arbre haute pression (11) et d'une valeur de couple de l'arbre haute pression (11) obtenue au moyen d'un estimateur de couple.

4. Système selon la revendication 2 ou 3, **caractérisé en ce que** la portion de la puissance (P_bp) de l'arbre basse pression (12) passant par la première machine électrique tournante (26) est déterminée à partir d'un courant (I) et d'une tension (U) du réseau électrique interne (22) de la turbomachine (1).

5. Système selon l'une quelconque des revendications 1 à 4, **caractérisé en ce qu'**il comporte deux machines électriques tournantes (26') reliées mécaniquement à l'arbre haute pression (11) par l'intermédiaire du boîtier d'accessoires (17).

6. Système selon l'une quelconque des revendications 1 à 5, **caractérisé en ce qu'**il comporte deux machines électriques tournantes (26) reliées mécaniquement à l'arbre basse pression (12).

7. Système selon l'une quelconque des revendications 1 à 6, **caractérisé en ce qu'**il comporte deux génératrices (15) reliées mécaniquement au boîtier d'accessoires (17).

8. Système selon l'une quelconque des revendications 1 à 7, **caractérisé en ce qu'**il comporte deux canaux électriques (34.1, 34.2) formés chacun par deux machines électriques tournantes (26, 26') et deux modules électriques de puissance (28, 28') connectés électriquement au réseau électrique interne (22) de la turbomachine (1).

9. Système selon l'une quelconque des revendications 1 à 8, **caractérisé en ce qu'**il comporte au moins un sous-ensemble (35) de stockage d'énergie électrique, tel qu'une batterie ou des supercondensateurs, connecté électriquement sur le réseau électrique interne (22) de la turbomachine (1).

10. Système selon l'une quelconque des revendications 1 à 9, **caractérisé en ce qu'**il comporte une génératrice (15') reliée mécaniquement au dispositif d'accouplement (27) de l'arbre basse pression (12), ladite génératrice (15') étant destinée à alimenter électriquement le réseau électrique (16) de l'avion.

11. Système selon l'une quelconque des revendications 1 à 10, **caractérisé en ce que** la génératrice (15) et la deuxième machine électrique tournante (26') sont montées sur le boîtier d'accessoires (17) tête-bêche l'une par rapport à l'autre.

12. Avion comportant un système de conversion et de transport d'énergie électrique tel que défini selon l'une quelconque des revendications précédentes.

**Patentansprüche**

1. System (25) zum Umwandeln und Transportieren elektrischer Energie für ein von einer Turbomaschine (1) angetriebenes Flugzeug, von der bzw. in die Leistung über eine Hochdruckwelle (11) und/oder eine Niederdruckwelle (12) entnommen bzw. eingespeist werden kann, wobei das System (25) umfasst:

- ein internes elektrisches Netz (22) der Turbomaschine (1),
- mindestens eine erste rotierende elektrische Maschine (26), die über eine Kupplungsvorrichtung (27) mechanisch mit der Niederdruckwelle (12) verbunden werden soll,
- ein erstes mit der ersten elektrischen Maschine (26) in Verbindung gebrachtes elektrisches Leistungsmodul (28),
- eine zweite rotierende elektrische Maschine (26'), die über ein Zubehörgehäuse (17) mechanisch mit der Hochdruckwelle (11) verbunden werden soll, und
- ein zweites mit der zweiten rotierenden elektrischen Maschine (26') in Verbindung gebrachten elektrisches Leistungsmodul (28'),
- wobei das erste elektrische Leistungsmodul (28) und das zweite elektrische Leistungsmodul (28') elektrisch mit dem internen elektrischen Netzwerk (22) der Turbomaschine (1) verbunden sind,

**dadurch gekennzeichnet, dass** das System (25) umfasst:

- einen Generator (15), der mit dem Zubehörgehäuse (17) gekoppelt werden und ein elektrisches Netz des Flugzeugs (16) versorgen soll, wobei das interne elektrische Netz (22) der Turbomaschine (1) von dem elektrischen Netz des Flugzeugs (16) elektrisch isoliert ist, wenn das System im Flugzeug installiert ist, und
- eine Steuervorrichtung (30), die in der Lage ist, die Startunterstützung für die Turbomaschine (1) durch mindestens eine der rotierenden elektrischen Maschinen (26, 26') zu steuern, die vom Generator (15) aufgenommene Leistung auszugleichen und eine Aufteilung zwischen einer von der Hochdruckwelle (11) aufgenommenen Leistung und einer von der Niederdruckwelle (12) aufgenommenen Leistung in Abhängigkeit von Betriebsphasen der Turbomaschine (1) vorzunehmen.

2. System nach Anspruch 1, **dadurch gekennzeichnet, dass** die Steuervorrichtung (30) dazu ausgebildet ist, einen Leistungsverteilungskoeffizienten Sp in Abhängigkeit von Betriebsphasen der Turbomaschine (1) zu modifizieren, wobei der Leistungsverteilungskoeffizient Sp wie folgt definiert ist:

$$Sp = P\_hp/(P\_hp+P\_bp),$$

wobei

- P_hp ein Anteil der Leistung der Hochdruckwelle (11) durch das Zubehörgehäuse (17) ist,
- P_bp ein Anteil der Leistung der Niederdruckwelle (12) durch die erste rotierende elektrische Maschine (26) ist.

3. System nach Anspruch 2, **dadurch gekennzeichnet, dass** der Anteil der Leistung (P_hp) der Hochdruckwelle (11) durch das Zubehörgehäuse (17) aus einer Drehzahlmessung (N2) eines an der Hochdruckwelle (11) montierten Drehzahlsensors (32) und einem mittels eines Drehmomentschätzers ermittelten Drehmomentwert der Hochdruckwelle (11) ermittelt wird.

4. System nach Anspruch 2 oder 3, **dadurch gekennzeichnet, dass** der Anteil der Leistung (P_bp) der Niederdruckwelle (12) durch die erste rotierende elektrische Maschine (26) aus einem Strom (I) und einer Spannung (U) des internen elektrischen Netzes (22) der Turbomaschine (1) ermittelt wird.

5. System nach einem der Ansprüche 1 bis 4, **dadurch gekennzeichnet, dass** es zwei rotierende elektrische Maschinen (26') umfasst, die über das Zubehörgehäuse (17) mechanisch mit der Hochdruckwelle (11) verbunden sind.

**6.** System nach einem der Ansprüche 1 bis 5, **dadurch gekennzeichnet, dass** es zwei rotierende elektrische Maschinen (26) umfasst, die mechanisch mit der Niederdruckwelle (12) verbunden sind.

**7.** System nach einem der Ansprüche 1 bis 6, **dadurch gekennzeichnet, dass** es zwei Generatoren (15) umfasst, die mechanisch mit dem Zubehörgehäuse (17) verbunden sind.

**8.** System nach einem der Ansprüche 1 bis 7, **dadurch gekennzeichnet, dass** es zwei elektrische Kanäle (34.1, 34.2) umfasst, die jeweils aus zwei rotierenden elektrischen Maschinen (26, 26') und zwei elektrisch mit dem internen elektrischen Netzwerk (22) der Turbomaschine (1) verbundenen elektrischen Leistungsmodulen (28, 28') bestehen.

**9.** System nach einem der Ansprüche 1 bis 8, **dadurch gekennzeichnet, dass** es mindestens ein elektrisch mit dem internen elektrischen Netz (22) der Turbomaschine (1) verbundenes Teilsystem (35) zur Speicherung elektrischer Energie, wie etwa eine Batterie oder Superkondensatoren, umfasst.

**10.** System nach einem der Ansprüche 1 bis 9, **dadurch gekennzeichnet, dass** es einen mit der Kupplungsvorrichtung (27) der Niederdruckwelle (12) mechanisch verbundenen Generator (15') zur elektrischen Versorgung des elektrischen Netzes (16) des Flugzeugs umfasst.

**11.** System nach einem der Ansprüche 1 bis 10, **dadurch gekennzeichnet, dass** der Generator (15) und die zweite rotierende elektrische Maschine (26') in einer Kopf-Schwanz-Konfiguration auf dem Zubehörgehäuse (17) montiert sind.

**12.** Flugzeug mit einem System zum Umwandeln und Transportieren elektrischer Energie, wie es gemäß einem der vorhergehenden Ansprüche definiert ist.

**Claims**

**1.** A system (25) for converting and transporting electrical energy for an aircraft powered by a turbomachine (1) from or to which power can be drawn resp. injected via a high pressure shaft (11) and/or a low pressure shaft (12), said system (25) comprising:

- an internal electrical network (22) of the turbomachine (1),
- at least one first rotating electrical machine (26) aimed to be mechanically connected to the low pressure shaft (12) via a coupling device (27),
- a first electrical power module (28) associated with said first electrical machine (26),

- a second rotating electrical machine (26') aimed to be mechanically connected to the high pressure shaft (11) via an accessory box (17), and
- a second electrical power module (28') associated with said second rotating electrical machine (26'),
- said first electrical power module (28) and said second electrical power module (28') being electrically connected to the internal electrical network (22) of the turbomachine (1),

**characterized in that** said system (25) comprises:

- a generator (15) aimed to be coupled with the accessory box (17) and to electrically supply an electrical network of the aircraft (16), said internal electrical network (22) of the turbomachine (1) being electrically isolated from the electrical network of the aircraft (16) when the system is installed in the aircraft, and
- a control device (30) capable of controlling assistance in starting the turbomachine (1) by at least one of the rotating electrical machines (26, 26'), compensating for power drawn by the generator (15), and carrying out a distribution between a power drawn from the high pressure shaft (11) and a power drawn from the low pressure shaft (12) as a function of operating phases of the turbomachine (1).

**2.** The system according to claim 1, **characterized in that** the control device (30) is configured to modify a power distribution coefficient Sp as a function of operating phases of the turbomachine (1), said power distribution coefficient Sp being defined as follows:

$$Sp = P\_hp/(P\_hp+P\_bp)$$

- P_hp being a portion of the power of the high pressure shaft (11) through the accessory box (17),
- P_bp being a portion of the power of the low pressure shaft (12) through the first rotating electrical machine (26).

**3.** The system according to claim 2, **characterized in that** the portion of the power (P_hp) of the high pressure shaft (11) through the accessory box (17) is determined from a rotation speed measurement (N2) carried out by a speed sensor (32) mounted on the high pressure shaft (11) and from a torque value of the high pressure shaft (11) obtained by means of a torque estimator.

**4.** The system according to claim 2 or 3, **characterized**

**in that** the portion of the power (P_bp) of the low pressure shaft (12) through the first rotating electrical machine (26) is determined from a current (I) and a voltage (U) of the internal electrical network (22) of the turbomachine (1).

5.  The system according to any one of the claims 1 to 4, **characterized in that** it comprises two rotating electrical machines (26') mechanically connected to the high pressure shaft (11) via the accessory box (17).

6.  The system according to any one of the claims 1 to 5, **characterized in that** it comprises two rotating electrical machines (26) mechanically connected to the low pressure shaft (12).

7.  The system according to any one of the claims 1 to 6, **characterized in that** it comprises two generators (15) mechanically connected to the accessory box (17).

8.  The system according to any one of the claims 1 to 7, **characterized in that** it comprises two electrical channels (34.1, 34.2) each formed by two rotating electrical machines (26, 26') and two electrical power modules (28, 28') electrically connected to the internal electrical network (22) of the turbomachine (1).

9.  The system according to any one of the claims 1 to 8, **characterized in that** it comprises at least one subassembly (35) for storing electrical energy, such as a battery or supercapacitors, electrically connected to the internal electrical network (22) of the turbomachine (1).

10. The system according to any one of the claims 1 to 9, **characterized in that** it comprises a generator (15') mechanically connected to the coupling device (27) of the low pressure shaft (12), said generator (15') being provided for electrically supplying the electrical network (16) of the aircraft.

11. The system according to any one of the claims 1 to 10, **characterized in that** the generator (15) and the second rotating electrical machine (26') are mounted on the accessory box (17) in a head-to-tail configuration.

12. An aircraft comprising a system for converting and transporting electrical energy as defined according to any one of the preceding claims.

[Fig. 1]

[Fig. 2]

[Fig. 3]

[Fig. 4]

[Fig. 5]

[Fig. 6] [Fig. 7] [Fig. 8]

[Fig. 9]

**RÉFÉRENCES CITÉES DANS LA DESCRIPTION**

**Documents brevets cités dans la description**

- WO 2020089544 A

- WO 2021099720 A